# EUROPÄISCHE PATENTSCHRIFT

(11) **EP 0 626 118 B1**
(45) Veröffentlichungstag und Bekanntmachung des Hinweises auf die Patenterteilung: **09.04.2003**
(21) Anmeldenummer: 93924523.9
(22) Anmeldetag: 18.11.1993
(51) Int. Cl.: H04M 1/72

(54) **SCHNURLOSES TELEFON**
WIRELESS TELEPHONE
TELEPHONE SANS FIL

(30) Priorität: 11.12.1992 DE 4241838
(43) Veröffentlichungstag der Anmeldung: 30.11.1994
(73) Patentinhaber: ROBERT BOSCH GMBH, 70442 Stuttgart (DE)
(72) Erfinder: BORGMANN-FISSER, Udo, D-38300 Wolfenbüttel (DE)
(86) Internationale Anmeldenummer: DE9301094
(87) Internationale Veröffentlichungsnummer: WO94014272

(56) Entgegenhaltungen:
- EP-A- 0 248 351
- EP-A- 0 282 087
- EP-A- 0 317 708
- EP-A- 0 345 939
- EP-A- 0 401 916

## Beschreibung

Die Erfindung geht von einem schnurlosen Telefon nach dem Oberbegriff des Anspruchs 1 aus.

Aus der GB-A 2 219 466 ist ein Verfahren bekannt geworden, bei dem bei einem Multikanalkommunikationssystem die Zeit zum Auffinden eines gemeinsamen Übertragungskanals verringert wird. Hierzu berechnet die Basisstation einen Startpunkt, ab dem sie einen freien Kanal sucht, um mit einem Handapparat Kontakt aufzunehmen. Beim Handapparat wird dem gegenüber der Startpunkt, ab dem der Handapparat nach einer Nachricht von der Basisstation sucht, durch einen Pseudozufallsgenerator festgelegt, der den Startpunkt des Handapparats bestimmt. Von diesem Startpunkt aus tastet der Handapparat die Frequenzen gruppenweise ab. Empfängt er in der ersten Gruppe keine Informationen, so schaltet er auf die nächste Gruppe von Kanälen und sucht so weitere Kanäle ab. Durch dieses Verfahren soll bei der Druckschrift ein Verbindungsaufbau möglichst schnell ermöglicht werden.

Es ist ein schnurloses Telefon bekannt (DE-OS 33 37 358), bei dem die Standzeit des Akkumulators zur Stromversorgung der Mobilstation dadurch erhöht wird, daß Basisstation und Mobilstation eines jeden schnurlosen Telefons mindestens vor der ersten Inbetriebnahme eine kleinere Zahl m von erfahrungsgemäß freien Funkkanälen aus der Gesamtzahl n der für das schnurlose Telefonnetz vorgesehenen Funkkanäle vereinbaren und speichern. Der Empfangsteil von Basisstation und Mobilstation ist dabei nur für bestimmte, durch gleichlange Pausenzeiten unterbrochene Prüf- oder Abtastzeiten eingeschaltet, in denen der Empfangsteil die m vereinbarten Funkkanäle auf ihren Belegungszustand prüft.

Der Erfindung liegt die Aufgabe zugrunde, das bekannte schnurlose Telefon derart weiterzubilden, daß seine Mobilstation einen möglichst geringen, individuell wählbaren Stromverbrauch hat, so daß sich die Standzeit des Akkumulators bzw. die Betriebszeit der Mobilstation erhöht.

Die Aufgabe wird durch ein schnurloses Telefon mit den Merkmalen des Anspruchs 1 gelöst. Damit ist der Vorteil verbunden, daß der Benutzer des schnurlosen Telefons durch die variable Einschränkung der abzutastenden Funkkanäle selbst bestimmen kann, wie lange der Akkumulator seiner Mobilstation nach einer vollständigen Aufladung betriebsbereit sein soll. Bei einer besonders vorteilhaften Ausgestaltung des schnurlosen Telefons ist die kleinere Funkkanalzahl m über eine Tastatur der Mobilstation in eine Mikroprozessorschaltung der Mobilstation eingebbar. Damit wird der technische Aufwand für das Auswählen der m Funkkanäle besonders gering gehalten.

Ein Ausführungsbeispiel der Erfindung ist in der Zeichnung an Hand mehrerer Figuren dargestellt und wird im folgenden näher erläutert.
Es zeigen
- Fig. 1: den Stromverbrauch einer Mobilstation in Abhängigkeit von der Zeit bei unterschiedlichen Zahlen von abzutastenden Funkkanälen,
- Fig. 2A: eine Ansicht eines eine Basisstation und eine darauf abgelegte Mobilstation enthaltenden schnurlosen Telefons und
- Fig. 2B: eine Seitenansicht der Mobilstation nach Fig. 2A.

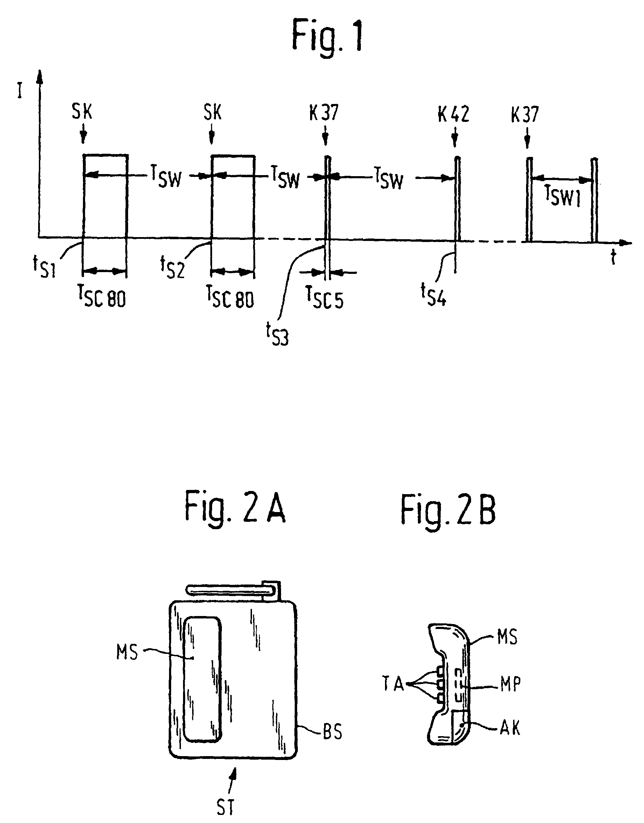

Nach Fig. 1 beginnt eine Mobilstation MS eines schnurlosen Telefons ST (Fig. 2A) zu einer Abtaststartzeit tₛ₁ mit der sequentiellen Abtastung von n Funkkanälen. Die Abtastung beginnt mit einem Startkanal SK, der der Basisstation BS und der zugehörigen Mobilstation MS bekannt ist und der sich aus der Identifikationsnummer ergibt, vorausgesetzt, daß für die Basisstation BS und die Mobilstation MS das gleiche mathematische Auswahlverfahren angewendet wird. Gehören zu dem schnurlosen Telefonnetz zum Beispiel n = 80 Funkkanäle, dann benötigt die Mobilstation zum Abtasten eine Zeit T_{SC80}, die der Summe der Abtastzeiten für die n Funkkanäle entspricht. Diese Art der Abtastung ergibt einen maximalen Stromverbrauch I · t und damit eine minimale Standzeit für den Akkumulator AK (Fig. 2B) der Mobilstation MS. Sind alle n Funkkanäle belegt, dann schließt sich an die Abtastzeit T_{SC800} nach einer aus Stromersparnisgründen vorgesehenen Pause zu einem Zeitpunkt t_{S2} eine weitere Abtastzeit T_{SC80} an, die wieder mit dem Startkanal SK beginnt. Die Zeit zwischen zwei Abtaststartzeiten t_{S1} und t_{S2} wird als Abtastintervall T_{SW} bezeichnet. Die Abtastintervalle wiederholen sich solange, bis die Mobilstation MS im Falle eines Gesprächswunsches einen freien Funkkanal oder im Falle eines Anrufs von der Basisstation BS den Funkkanal mit dem für sie bestimmten Anruf gefunden hat.

Dem Benutzer des schnurlosen Telefons steht es frei, anstelle der Abtastzeit T_{SC80} eine kürzere Abtastzeit zu wählen; vgl. zum Beispiel die zu einer Abtaststartzeit tₛ₃ mit dem Startkanal K37 beginnende Abtastzeit T_{SC5}, die nur fünf Funkkanäle umfaßt. Stellt die Mobilstation MS fest, daß während der Abtastzeit T_{SC5} alle Funkkanäle frei sind, so ist davon auszugehen, daß kein Verbindungswunsch von der Basisstation BS zur Mobilstation MS besteht. Die Mobilstation kann daher sofort in einen Verharrungszustand eintreten, ohne daß der Akkumulator AK weiterhin belastet wird. Sind dagegen alle fünf Funkkanäle mit für die Mobilstation MS betriebsirrelevanten Informationen belegt, so beginnt die Mobilstation MS mit der Abtastung der darauffolgenden fünf Funkkanäle, die mit dem Startkanal K42 beginnen. Sollten die m Funkkanäle auch belegt sein, dann tastet die Mobilstation MS die nächsten fünf Funkkanäle ab usw. Da es jedoch äußerst unwahrscheinlich ist, daß alle m Funkkanäle belegt sind - dieses wäre allenfalls eine temporäre Erscheinung -, wird in der Regel ein freier Funkkanal zu einem wesentlich früheren Zeitpunkt, zum Beispiel schon innerhalb der ersten fünf Funkkanäle, gefunden werden.

Trotz gleichlanger Abtastintervalle T_{SW} wie bei dem Abtasten aller n Funkkanäle ergibt sich in der Praxis ein deutlicher Stromspareffekt. Dieser kann zum einen dazu ausgenutzt werden, die Standzeit des Akkumulators bei von der Basisstation BS abgenommener Mobilstation MS um ein Vielfaches zu erhöhen, zum Beispiel von einer Bereitschaftsdauer von etwa 50 Stunden auf über 200 Stunden bei gleicher Akkumulatorkapazität. Bei unveränderter Bereitschaftsdauer von zum Beispiel 50 Stunden könnte ein Akkumulator mit geringerer Kapazität verwendet werden, der den Vorteil eines günstigeren Preises und eines geringeren Gewichts hätte.

Anstelle des Einsatzes eines Akkumulators AK mit geringerer Kapazität kann ein Teil der Stromersparnis gegebenenfalls auch dazu ausgenutzt werden, die Abtastintervalle T_{SW} zu verkleinern, vgl. T_{SW1}, wodurch die Abtastung der m Funkkanäle in kürzeren Zeitabständen stattfindet. Dies bedeutet eine erhebliche Reaktionsverkürzung beim Verbindungsaufbau zwischen Basisstation BS und Mobilstation MS und umgekehrt.

Das für das schnurlose Telefon ST benötigte Programm ist in einer Mikroprozessorschaltung MP der Mobilstation MS (Fig. 2B) gespeichert. Die Zahl m der abzutastenden Funkkanäle kann der Benutzer über die ohnehin vorhandene Tastatur TA in die Mobilstation MS eingeben, wobei der Benutzer die Zahl m so wählt, daß sie zu Zeiten, in denen er zum Beispiel in seinem Büro mit wichtigen Anrufen rechnet, größer ist als in den übrigen Zeiten.

In dem Fall, daß das Abtastintervall T_{SW} verkürzt werden soll (vgl. Abtastzeit T_{SW1} in Fig. 1), kann der Benutzer eine der zum Beispiel in Stufen aufgeteilten Abtastintervalle mit der Tastatur TA wählen. Auch das dafür erforderliche Programm ist in der Mikroprozessorschaltung MP der Mobilstation MS gespeichert.

Eine weitere Möglichkeit, den Verbindungsaufbau zwischen Basisstation BS und Mobilstation MS und umgekehrt zu beschleunigen, besteht darin, bei der wiederholten Abtastung die Zahl der abzutastenden Funkkanäle zu erhöhen. Werden zum Beispiel bei der ersten Abtastung nur m1 = 5 Funkkanäle berücksichtigt, so können bei der ersten wiederholten Abtastung zum Beispiel m2 = 10 Funkkanäle und bei der zweiten wiederholten Abtastung m3 = 15 Funkkanäle gewählt werden. Auch diese Zahlen m1, m2, m3 werden über die Tastatur TA der Mobilstation MS (vgl. Fig. 2B) in die Mikroprozessorschaltung MP eingegeben und darin gespeichert.

## Patentansprüche

1. Schnurloses Telefon mit einer Basisstation (BS) und einer Mobilstation (MS), die m Funkkanäle nacheinander abtastet, wobei m kleiner als n und n die Gesamtzahl der zu dem schnurlosen Telefonnetz gehörenden Funkkanäle ist, **dadurch gekennzeichnet, daß** die Mobilstation (MS) Mittel (TA, MP) aufweist, mit denen die Mobilstation (MS) jederzeit auf eine frei wählbare, kleinere Zahl m von abzutastenden Funkkanälen umschaltbar ist, daß die Abtastung mit einem für die Basisstationen (BS) und die Mobilstationen (MS) gleichen individuellen aus einer gleichen Identifikationsnummer bestimmten Startkanal (SK) beginnt, und daß sich eine Abtastung der nächsten m Funkkanäle anschließt, wenn die ersten m Funkkanäle belegt sind.

2. Schnurloses Telefon nach Anspruch 1, **dadurch gekennzeichnet, daß** die Zahl m über eine Tastatur (TA) der Mobilstation (MS) in eine Mikroprozessorschaltung (MP) der Mobilstation eingebbar ist.

3. Schnurloses Telefon nach Anspruch 1 oder 2, **dadurch gekennzeichnet, daß** der Startkanal (SK) von der für die Basisstation (BS) und die Mobilstation (MS) geltenden, nach dem gleichen mathematischen Verfahren ermittelten und beiden Stationen bekannten Identifikationsnummer abgeleitet ist.

4. Schnurloses Telefon nach einem der Ansprüche 1 bis 3, **dadurch gekennzeichnet, daß** die Dauer von Abtastintervallen (T_{SW}, T_{SW1}) über die Tastatur (TA) der Mobilstation (MS) in die Mikroprozessorschaltung (MP) der Mobilstation eingebbar ist.

5. Schnurloses Telefon nach einem der Ansprüche 1 bis 4, **dadurch gekennzeichnet, daß** bei der ersten Abtastung eine geringe Zahl von Funkkanälen und bei der zweiten und den folgenden Abtastungen eine zunehmende Zahl (m1 < m2 < m3) von Funkkanälen berücksichtigt wird und daß die Zahlen (m1, m2, m3) von Funkkanälen über die Tastatur (TA) in die Mikroprozessorschaltung (MP) der Mobilstation (MS) eingebbar sind.

## Claims

1. Cordless telephone having a base station (BS) and a mobile station (MS) which successively scans m radio channels, where m is less than n and n is the total number of radio channels belonging to the cordless telephone network, **characterized in that** the mobile station (MS) has means (TA, MP) with which it is possible to switch the mobile station (MS) over at any time to a freely selectable, smaller number m of radio channels to be scanned, **in that** the scanning begins with a start channel (SK) which is the same for the base stations (BS) and the mobile stations (MS) and is specific to the base stations (BS) and the mobile stations (MS), and which is determined from an identical identification number, and **in that** this is followed by scanning of the next m radio channels if the first m radio channels are busy.

2. Cordless telephone according to Claim 1, **characterized in that** the number m can be entered into a microprocessor circuit (MP) of the mobile station via a keypad (TA) of the mobile station (MS).

3. Cordless telephone according to Claim 1 or 2, **characterized in that** the start channel (SK) is derived from the identification number which is valid for the base station (BS) and the mobile station (MS), is calculated according to the same mathematical method, and is known to both stations.

4. Cordless telephone according to one of Claims 1 to 3, **characterized in that** the duration of scanning intervals (T_{SW}, T_{SW1}) can be entered into the microprocessor-circuit (MP) of the mobile station via the keypad (TA) of the mobile station (MS).

5. Cordless telephone according to one of Claims 1 to 4, **characterized in that** a small number of radio channels is covered during the first scan and an increasing number (m1 < m2 < m3) of radio channels is covered during the second and the following scans, and **in that** the numbers (m1, m2, m3) of radio channels can be entered into the microprocessor circuit (MP) of the mobile station (MS) via the keypad (TA).

## Revendications

1. Téléphone sans fil comprenant une station de base (BS) et d'une station mobile (MS) qui balaie successivement m fonctions, m étant inférieur à n qui est le nombre total des canaux radio appartenant au téléphone sans fil,
**caractérisé en ce que**
la station mobile (MS) présente des moyens (TA, MP) par lesquels cette station (MS) peut être commutée à tout moment sur un plus petit nombre m, qui peut être choisi à volonté, de canaux radio à balayer, le balayage commençant par un même canal individuel de départ (SK) défini par un même nombre d'identifications pour la station de base (BS) et pour la station mobile (MS), et un balayage de m canaux radio les plus proches s'effectue dès que les m premiers canaux ont été servis.

2. Téléphone sans fil selon la revendication 1,
**caractérisé en ce que**
le nombre m peut être introduit dans un circuit de microprocesseur (MP) de la station mobile, par l'intermédiaire d'un clavier (TA) de la station mobile (MS).

3. Téléphone sans fil selon la revendication 1 ou 2,
**caractérisé en ce que**
le canal de départ (SK) peut être déduit du nombre d'identifications valable pour la station de base (BS) et la station mobile (MS), établi selon le même processus mathématique et connu des deux stations.

4. Téléphone sans fil selon l'une quelconque des revendications 1 à 3,
**caractérisé en ce que**
la durée des intervalles de balayage (T_{SWs}, T_{SW1}) peut être introduite dans le circuit de microprocesseur (MP) de la station mobile par l'intermédiaire du clavier (TA) de la station mobile.

5. Téléphone sans fil selon l'une quelconque des revendications 1 à 4,
**caractérisé en ce qu'**
il est pris en compte, au premier balayage, un nombre faible de canaux radio, et au deuxième balayage et aux suivants un nombre croissant de canaux radio (m1 < m2 < m3), ces nombres de canaux (m1 m2, m3) pouvant être introduits dans le circuit de microprocesseur (MP) de la station mobile (MS) par l'intermédiaire du clavier (TA).
